# EUROPEAN PATENT SPECIFICATION

(11) **EP 4 112 699 B1**
(45) Date of publication and mention of the grant of the patent: **04.11.2026**
(21) Application number: 22181832.1
(22) Date of filing: 29.06.2022
(51) Int. Cl.: C09K 3/14, C09G 1/02

(54) **SURFACE-MODIFIED COLLOIDAL SILICA AND POLISHING COMPOSITION CONTAINING THE SAME**
OBERFLÄCHENMODIFIZIERTES KOLLOIDALES SILIZIUMDIOXID UND DASSELBE ENTHALTENDE POLIERZUSAMMENSETZUNG
SILICE COLLOÏDALE MODIFIÉE EN SURFACE ET COMPOSITION DE POLISSAGE LA CONTENANT

(30) Priority: 29.06.2021 JP 2021107392
(43) Date of publication of application: 04.01.2023
(73) Proprietor: Fujimi Incorporated, Kiyosu-shi, Aichi 452-8502 (JP)
(72) Inventor: Tsubota, Shogo, Kiyosu-shi, Aichi (JP); Ito, Masaaki, Kiyosu-shi, Aichi (JP); Ashitaka, Keiji, Kiyosu-shi, Aichi (JP); Shinoda, Jun, Kiyosu-shi, Aichi (JP); Kawasaki, Yusuke, Kiyosu-shi, Aichi (JP)
(74) Representative: Grünecker Patent- und Rechtsanwälte PartG mbB

(56) References cited:
- EP-A1- 2 722 872
- US-A1- 2015 166 839

## Description

### TECHNICAL FIELD

The present invention relates to a surface-modified colloidal silica and a polishing composition containing the same.

### BACKGROUND ART

In recent years, what is called a chemical mechanical polishing (CMP) technique has been used to physically polish and planarize semiconductor substrates in device manufacturing processes as wiring has been increasingly being applied in a multilayer structure at the surfaces of semiconductor substrates. CMP is a method for planarizing the surface of an object to be polished (object to be subjected to polishing), such as a semiconductor substrate, with a polishing composition (slurry) containing an abrasive, such as silica, alumina, or ceria, an anticorrosive agent, and a surfactant. More specifically, CMP is used in processes for shallow trench isolation (STI), planarizing interlayer dielectric films (ILD films, or interlayer insulating films), forming tungsten plugs, wiring in a multilayer structure including copper and low-dielectric constant films, and so on.

For example, EP 2 722 872 A1 and US 2015/166839 A1 disclose polishing compositions comprising colloidal silica particles, wherein polymers are physically adsorbed on their surface. Japanese Patent Laid-Open No. 2009-256184 discloses a colloidal silica that is surface-improved with a polyethylene oxide having a molecular weight of 15,000 or less, and a CMP polishing composition containing the colloidal silica.

### SUMMARY OF INVENTION

Unfortunately, the polishing composition disclosed in Japanese Patent Laid-Open No. 2009-256184 is insufficient in wettability on objects to be polished and has problems in the effect of improving polishing performance in terms of keeping good the surface conditions of the polished object and/or ensuring an appropriate polishing speed. In addition, the stability over time of the surface-improved (surface-modified) colloidal silica disclosed in Japanese Patent Laid-Open No. 2009-256184 is insufficient, and, for example, the dispersibility degrades over time.

Accordingly, an object of the present invention is to provide means for improving the wettability of surface-modified colloidal silica on the object to be polished and the stability over time of the colloidal silica.

The present inventors have conducted intensive research to solve the above-described problems. As a result, the present inventors found that a surface-modified colloidal silica that contains colloidal silica and a surface-modifying group for modifying a surface of the colloidal silica, which has a polyoxyalkylene chain having a weight average molecular weight of 20,000 or more, and wherein the surface-modifying group is chemically bonded to the surface of the colloidal silica via siloxane bonds, solves the problems, thus accomplishing the present invention.

### DESCRIPTION OF EMBODIMENTS

The embodiments of the present invention will be described in detail as follows, but the present invention is not limited to the following embodiments alone. Throughout the present specification, unless particularly stated otherwise, any expression in a singular form should be understood to encompass the concept of its plural form. Therefore, unless particularly stated otherwise, the article specifying a single form (for example, "a", "an", "the", and the like in the case of English language) should be understood to encompass the concept of its plural form. Furthermore, unless particularly stated otherwise, any term used in the present specification should be understood as a term that is used to have the meaning conventionally used in the relevant technical field. Therefore, unless defined otherwise, all the technical terms and scientific terms used in the present specification have the same meaning as generally understood by a person ordinarily skilled in the art to which the present invention is pertained. If there is any conflict in meaning, the present specification (including the definitions) takes priority. In addition, in this specification, unless otherwise specified, operation and measurement of physical properties, etc., are performed under conditions of room temperature (20°C or higher and 25°C or lower)/relative humidity of 40% RH or more and 50% RH or less.

The surface-modified colloidal silica according to an aspect of the present invention contains colloidal silica, and a surface-modifying group for modifying a surface of the colloidal silica, which has a polyoxyalkylene chain having a weight average molecular weight of 20,000 or more, wherein the surface-modifying group is chemically bonded to the surface of the colloidal silica via siloxane bonds. The surface-modified colloidal silica according to an aspect of the present invention, having such a feature, can have an increased wettability on the object to be polished and improved stability over time.

### [Surface-Modified Colloidal silica]

### (Colloidal Silica)

The colloidal silica contained in the surface-modified colloidal silica according to an aspect of the present invention may be produced by a sodium silicate process or a sol-gel process. The colloidal silica produced in either process can be favorably used in the present invention. However, colloidal silica produced by a sol-gel process is preferable from the viewpoint of reducing metal impurities. Colloidal silica produced by a sol-gel process contains metal impurities diffusible in semiconductors only at low contents or corrosive ions such as chloride ions only at low content. This is a reason that such colloidal silica is preferable. The sol-gel process for producing the colloidal silica can be conducted in a known manner. Specifically, the colloidal silica may be produced by a hydrolysis and condensation reaction of a hydrolysable silicon compound **(e.g.,** an alkoxysilane or a derivative thereof) being a raw material.

Preferably, the average primary particle diameter of the colloidal silica is 1 nm or more, more preferably 5 nm or more, and still more preferably 7 nm or more. The upper limit of the average primary particle diameter of the colloidal silica is preferably 100 nm or less, more preferably 75 nm or less, and still more preferably 50 nm or less. Colloidal silica with such an average primary particle diameter can reduce scratches and other defects that may be formed on the surface of the object polished with the polishing composition. That is to say, the average primary particle diameter of the colloidal silica is preferably 1 nm to 100 nm, more preferably 5 nm to 75 nm, and still more preferably 7 nm to 50 nm. The average primary particle diameter of colloidal silica is calculated from the specific surface area of the colloidal silica measured by, for example, the Brunauer-Emmett-Teller (BET) method.

The lower limit of the average secondary particle diameter of the colloidal silica is preferably 2 nm or more, more preferably 10 nm or more, and still more preferably 15 nm or more. The upper limit of the average primary particle diameter of the colloidal silica is preferably 200 nm or less, more preferably 150 nm or less, and still more preferably 100 nm or less. That is to say, the average secondary particle diameter of the colloidal silica is preferably 2 nm to 200 nm, more preferably 10 nm to 150 nm, and still more preferably 15 nm to 100 nm. The average secondary particle diameter of the colloidal silica may be measured by, for example, a dynamic light scattering method typified by a laser diffraction scattering method.

The average association degree of the colloidal silica is preferably 5.0 or less, more preferably 4.0 or less, and still more preferably 3.0 or less. Such colloidal silica can further reduce defects. Also, the average association degree of the colloidal silica is preferably 1.0 or more, more preferably 1.2 or more, and still more preferably 1.5 or more. That is to say, the average association degree of the colloidal silica is preferably 1.0 to 5.0, more preferably 1.2 to 4.0, and still more preferably 1.5 to 3.0**.** The average association degree can be obtained by dividing the average secondary particle diameter of the colloidal silica by the average primary particle diameter.

The colloidal silica particles may be spherical or non-spherical, having any shapes without particular limitation. Examples of the spherical shapes include, but are not limited to, a triangular prism, a cylinder, a barrel form whose center curves outward compared to the ends, a donut-like shape with a hollow center, a plate-like shape, a cocoon-like shape with a central constriction, what is called associated spheres in which a plurality of particles are joined together, a confeito-like shape (or spherical candy-like shape with a plurality of protrusions), a rugby ball-like shape, and other various shapes.

### [Surface-Modifying Group with Polyoxyalkylene Chain]

The surface-modified colloidal silica according to an aspect of the present invention contains a surface-modifying group chemically bonded to the surface of the colloidal silica via siloxane bonds. The surface-modifying group according to the present invention has a polyoxyalkylene chain having a weight average molecular weight of 20,000 or more.

Examples of the polyoxyalkylene chain include a polyethylene glycol chain, a polypropylene glycol chain, a polytrimethylene glycol chain, a polytetramethylene glycol chain, and a polyisobutylene glycol chain. In the surface-modifying group according to the present invention, the polyoxyalkylene chain may be composed of a single oxyalkylene or two or more oxyalkylenes. Examples of the polyoxyalkylene chain formed of two or more oxyalkylenes include a polyoxyethylene-polyoxypropylene chain, a polyoxyethylene-polyoxytetramethylene chain, and a polyoxyethylene-polyoxypropylene-polyoxyethylene chain. When the surface-modifying group contains two or more oxyalkylenes, the binding form of the two or more oxyalkylenes may be random, alternating, blocked, or periodic. Preferably, the polyoxyalkylene chain is at least one selected from the group consisting of a polyoxyethylene chain, a polyoxypropylene chain, a polyoxyethylene-polyoxypropylene chain, and a polyoxyethylene-polyoxypropylene-polyoxyethylene chain and is more preferably a polyoxyethylene chain.

In an embodiment of the present invention, the surface-modifying group may have a structure in which the polyoxyalkylene chain may be terminated with an aliphatic hydrocarbon group. In other words, the hydrogen atom of one of the terminal hydroxy groups of the polyoxyalkylene chain may be replaced with an aliphatic hydrocarbon group.

The aliphatic hydrocarbon group terminating the end of polyoxyalkylene chain may be an aliphatic hydrocarbon group having 1 to 10 carbon atoms. Examples of the aliphatic hydrocarbon group having 1 to 10 carbon atoms include straight chain or branched alkyl groups, such as methyl, ethyl, n-propyl, isopropyl, n-butyl, isobutyl, sec-butyl, tert-butyl, pentyl, hexyl, heptyl, octyl, 2-ethylhexyl, and decyl groups; straight or branched alkenyl groups, such as vinyl and allyl groups; and alkynyl groups, such as ethynyl and propynyl groups. Straight or branched alkyl groups are particularly preferable.

In an embodiment of the present invention, the polyoxyalkylene chain of the surface-modifying group has a weight average molecular weight (Mw) of 20,000 or more in terms of polyoxyalkylene. When the weight average molecular weight of the polyoxyalkylene chain is less than 20,000, the resulting surface-modified colloidal silica exhibits poor wettability. Additionally, a large amount of the surface-modifying agent must be added for synthesis to ensure desired properties, consequently degrading the stability over time of the surface-modified colloidal silica. The upper limit of the weight average molecular weight of the polyoxyalkylene chain is preferably, but not limited to, 100,000 or less, more preferably 50,000 or less. That is to say, the weight average molecular weight of the polyoxyalkylene chain is preferably 20,000 to 100,000 and is more preferably 20,000 to 50,000. The weight average molecular weight of the polyoxyalkylene can be measured by gel permeation chromatography (GPC) using polyethylene glycol as the reference material.

In an embodiment of the present invention, the surface-modifying group preferably contains a silicon atom and a linking group, and more preferably is at least one group selected from the groups represented by the following formula (1), the groups represented by the following formula (2), and the groups represented by the following formula (3). In the following formulas (1) to (3), bonding hands marked with a wavy line segment are bound to the surfaces of colloidal silica particles.

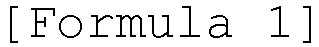

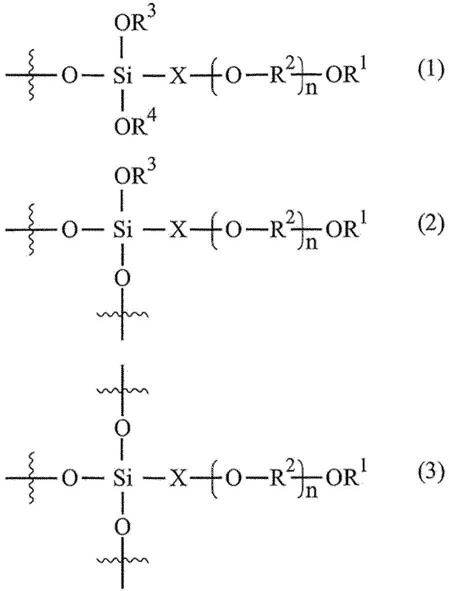

In formulas (1) to (3),
each R¹ independently represents a hydrogen atom or a hydrocarbon group having 1 to 30 carbon atoms;
each R² independently represents an alkylene group;
each n independently represents an average polymerization degree (number average polymerization degree) of the oxyalkylene chain [-(O-R²)-] and is a number of 280 or greater;
each X independently represents a single bond or a linking group (divalent group having one or more atoms); and
R³ and R⁴ each independently represent a hydrogen atom, an aliphatic hydrocarbon group having 1 to 3 carbon atoms, or a group represented by the following formula (a):

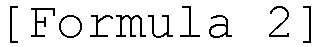

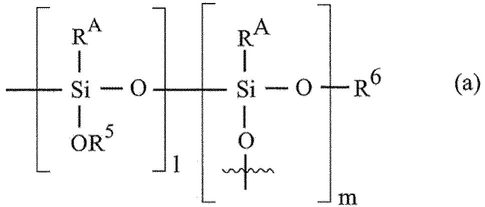

In formula (a), R^{A} represents [-X-(O-R²)ₙ-OR¹], wherein X, R¹, R², and n in R^{A} are the same as the X, R¹, R², and n defined in formulas (1) to (3), respectively; R⁵ and R⁶ each independently represent a hydrogen atom or an aliphatic hydrocarbon group having 1 to 3 carbon atoms; and l and m each independently represent a number of 0 or greater. In formula (a), the bonding hands extending leftward from silicon atoms are bound to oxygen atoms. In formula (a), the bonding hand marked with a wavy line segment is bound to the surfaces of colloidal silica particles.

Examples of the hydrocarbon group having 1 to 30 carbon atoms represented by R¹ in the above formulas (1) to (3) include alkyl groups, such as methyl, ethyl, propyl, isopropyl, n-butyl, sec-butyl, tert-butyl, isobutyl, amyl, isoamyl, tert-amyl, n-hexyl, cyclohexyl, cyclohexylmethyl, 2-cyclohexylethyl, n-heptyl, isoheptyl, tert-heptyl, n-octyl, isooctyl, tert-octyl, 2-ethylhexyl, n-nonyl, isononyl, n-decyl, n-undecyl, n-dodecyl, n-tridecyl, n-tetradecyl, n-pentadecyl, n-hexadecyl, n-heptadecyl, and n-octadecyl groups; alkenyl groups, such as vinyl, 1-methylethenyl, 2-methylethenyl, propenyl, butenyl, isobutenyl, pentenyl, hexenyl, heptenyl, octenyl, decenyl, pentadecenyl, and 1-phenylpropen-3-yl groups; alkylaryl groups, such as phenyl, naphthyl, 2-methylphenyl, 3-methylphenyl, 4-methylphenyl, 4-vinylphenyl, 3-isopropylphenyl, 4-isopropylphenyl, 4-butylphenyl, 4-isobutylphenyl, 4-tert-butylphenyl, 4-hexylphenyl, 4-cyclohexylphenyl, 4-octylphenyl, 4-(2-ethylhexyl)phenyl, 4-stearylphenyl, 2,3-dimethylphenyl, 2,4-dimethylphenyl, 2,5-dimethylphenyl, 2,6-dimethylphenyl, 3,4-dimethylphenyl, 3,5-dimethylphenyl, and 2,4-di-tert-butylphenyl groups; arylalkyl groups, such as benzyl, phenethyl, 2-phenylpropan-2-yl, diphenylmethyl, and triphenylmethyl groups; and arylalkenyl groups, such as styryl and cinnamyl groups.

R² in formulas (1) to (3) represents an alkylene group and is preferably an alkylene group having 1 to 4 carbon atoms. The alkylene groups having 1 to 4 carbon atoms include methylene, ethylene, propylene (methylethylene), trimethylene, butylene (tetramethylene), and isobutylene groups. Ethylene and propylene groups are particularly preferable. Plural R²s may be the same or different from each other. When plural R²s vary, the binding form of the oxyalkylene chain [-(O-R²)-] may be random, alternating, blocked, or periodic.

In formulas (1) to (3), n represents an average polymerization degree (number average polymerization degree) of the oxyalkylene chain [-(O-R²)-] and is a number of 280 or greater. Preferably, n is a number of 345 to 1725, more preferably 455 to 1390. When n is 280 or greater, the surface-modifying groups function sufficiently as a steric barrier to help the colloidal silica disperse in the dispersing medium and impart satisfactory wettability to the colloidal silica on the object to be polished.

In formulas (1) to (3), X represents a single bond or a linking group (divalent group having one or more atoms). Examples of the linking group include divalent hydrocarbon groups, a urethane linkage, a carbonyl group, ether linkages, ester linkages, a carbonate group, an amide group, and groups formed by combining a plurality of groups of at least one of these linking group species.

The divalent hydrocarbon groups include straight, branched, or cyclic alkylene groups having 1 to 18 carbon atoms. Examples of straight, branched, or cyclic alkylene groups having 1 to 18 carbon atoms include methylene, methylmethylene, dimethylmethylene, ethylene, propylene (methylethylene), trimethylene, butylene (tetramethylene), 1-methylpropylene, 2-methylpropylene, 1,2-dimethylpropylene, 1,3-dimethylpropylene, 1-methylbutylene, 2-methylbutylene, 3-methylbutylene, 2,4-dimethylbutylene, 1,3-dimethylbutylene, n-pentylene, n-hexylene, n-heptylene, n-octylene, ethane-1,1-diyl, propane-2,2-diyl, decane-1,10-diyl, undecane-1,11-diyl, dodecane-1,12-diyl, tridecane-1,13-diyl, tetradecane-1,14-diyl, pentadecane-1,15-diyl, hexadecane-1,16-diyl, heptadecane-1,17-diyl, octadecane-1,18-diyl, cyclopentane-1,2-diyl, cyclopentane-1,3-diyl, cyclohexane-1,1-diyl, cyclohexane-1,2-diyl, cyclohexane-1,3-diyl, cyclohexane-1,4-diyl, methylcyclohexane-1,4-diyl, and cyclohexane-1,4-dimethylene groups.

Preferably, the linking group represented by X contains a urethane linkage, more preferably a divalent hydrocarbon group (particularly a straight or branched alkylene group) and a urethane linkage. Such a linkage group is easy to synthesize. Preferably, the divalent hydrocarbon group (particularly a straight or branched alkylene group) in X is directly bound to the silicon atom in formulas (1) to (3). More specifically, X is - (CH₂)ₖ-NH-C(=O)- (the C at the left end is bound to the silicon atom, and the C at the right end is bound to O of the polyoxyalkylene chain). In this chemical formula, k represents a number of 1 to 18 and is preferably 1 to 6, more preferably 1 to 3.

In formula (1), R³ and R⁴ each independently represent a hydrogen atom, or an aliphatic hydrocarbon group having 1 to 3 carbon atoms. Examples of the aliphatic hydrocarbon group having 1 to 3 carbon atoms include alkyl groups, such as methyl, ethyl, propyl, and isopropyl groups; alkenyl groups, such as vinyl and allyl groups; and alkynyl groups, such as ethynyl and propynyl groups. Alkyl groups are particularly preferable. R³ in formula (2) is the same as R³ in formula (1).

In formula (a), R^{A} represents [-X-(O-R²)n-OR¹]. X, R¹, R², and n in R^{A}, including preferable forms, are the same as those in formulas (1) to (3), respectively. The binding form of two or more oxyalkylene chains [-(OR²)-] is the same as that described above. The bonding hands extending leftward from silicon atoms are bound to oxygen atoms. In the formula, the bonding hand with a wavy line segment is bound to the surfaces of colloidal silica particles.

In formula (a), R⁵ and R⁶ each independently represent a hydrogen atom or an aliphatic hydrocarbon group having 1 to 3 carbon atoms. Examples of the aliphatic hydrocarbon group having 1 to 3 carbon atoms include straight or branched alkyl groups, such as methyl, ethyl, n-propyl, and isopropyl groups; straight or branched alkenyl groups, such as vinyl, allyl, and propenyl groups; and alkynyl groups, such as ethynyl and propynyl groups. Straight or branched alkyl groups are particularly preferable.

In formula (a), l and m each independently represent a number of 0 or greater. The binding order of the constitutional unit marked with l and the constitutional unit marked with m is not particularly limited. More specifically, in formula (a), the silicon atom binding to an oxygen atom in formula (1) or (2) may be a silicon atom of the constitutional unit marked with l or a silicon atom of the constitutional unit marked with m. Similarly, the oxygen atom bound to R⁶ in formula (a) may be an oxygen atom of the constitutional unit marked with l or an oxygen atom of the constitutional unit marked with m. Also, when either l or m is a number of 1 or greater and the other is a number of 2 or greater, the binding form of the constitutional units marked with l and the constitutional units marked with m may be random, alternating, blocked, or periodic.

In an embodiment of the present invention in which the surface-modified colloidal silica has plural R¹s to R⁶s, Xs, ls, ms, or ns, the plural R¹s to R⁶s, Xs, ls, ms, or ns may respectively be the same or different.

Note that the structures of formulas (1) and (2) whose R³ or R⁴ is a hydrogen atom represent structures or the like in which unreacted alkoxysilyl groups of the surface-modifying group, according to the present invention, bound to the colloidal silica are hydrolyzed. Also, the structures in which R³ or R⁴ is an aliphatic hydrocarbon group having 1 to 3 carbon atoms represent structures or the like in which unreacted alkoxysilyl groups remain in the surface-modifying group, according to the present invention, bound to the colloidal silica. Also, Also, the structure in which R³ or R⁴ is a group represented by formula (a) represent structures or the like formed by allowing unreacted alkoxysilyl groups of the surface-modifying group of the present invention bonded to the colloidal silica to react with alkoxysilyl groups of another surface-modifying group of the present invention bonded by dehydration condensation with an unreacted polyoxyalkylene chain-containing silane coupling agent described later herein and/or colloidal silica.

### [Method for Producing Surface-Modified Colloidal silica]

The surface-modified colloidal silica according to an embodiment of the present invention may be produced, for example, by, but not limited to:
(a) a method of allowing colloidal silica to react with a polyoxyalkylene chain-containing silane coupling agent that has been synthesized in advance using a polyoxyalkylene and a silane coupling agent having a group capable of reacting with the terminal hydroxy group of a polyoxyalkylene having a weight average molecular weight of 20,000 or more; or
(b) a method of allowing colloidal silica to react with a silane coupling agent having a group capable of reacting with the terminal hydroxy group of a polyoxyalkylene having a weight average molecular weight of 20,000 or more, followed by a further reaction with the polyoxyalkylene having a weight average molecular weight of 20,000 or more.
In particular, method (a) may be applied in view of easy reaction control and production cost reduction. Method (a) will now be described.

### <Step of Synthesizing Polyoxyalkylene Chain-Containing Silane Coupling Agent>

In this step, a polyoxyalkylene chain-containing silane coupling agent (hereinafter also simply referred to as surface-modifying agent) is synthesized by allowing a silane coupling agent having a group capable of reacting with the terminal hydroxy group of a polyoxyalkylene having a weight average molecular weight of 20,000 or more to react with a polyoxyalkylene.

The silane coupling agent having a group capable of the terminal hydroxy group of a polyoxyalkylene is preferably, but not limited to, an isocyanate group-containing silane coupling agent. Examples of the isocyanate group-containing silane coupling agent include 3-isocyanatopropyltrimethoxysilane, 3-isocyanatopropyldimethoxymethylsilane, 3-isocyanatopropyltriethoxysilane, isocyanatomethyltrimethoxysilane, isocyanatomethyltriethoxysilane, and isocyanatomethyldimethoxymethylsilane. Such silane coupling agents may be used individually or in combination. Also, silane coupling agents may be commercial products or synthetics.

Examples of the polyoxyalkylene having a weight average molecular weight of 20,000 or more include, but are not limited to, polyoxyethylene, polyoxypropylene, polyoxybutylene, polyoxytetramethylene, polyoxyethylene-polyoxypropylene diblock copolymer, polyoxypropylene-polyoxytetramethylene diblock copolymer, and polyoxyethylene-polyoxypropylene-polyoxyethylene triblock copolymer. The binding form of the copolymers may be random, alternating, blocked, or periodic.

Such polyoxyalkylenes may be used individually or in combination. Also, the polyoxyalkylene may be a commercial product or a synthetic. Preferably, polyoxyethylene is used. Polyoxyethylene is particularly effective in the present invention among those polyoxyalkylenes.

The reaction between the silane coupling agent and the polyoxyalkylene may be conducted in, but not limited to, solvent-free conditions or an organic solvent. Examples of the organic solvents that can be used include aliphatic hydrocarbons, such as hexane, heptane, and octane; aromatic hydrocarbons, such as benzene, toluene, and xylene; alicyclic hydrocarbons, such as cyclohexane and methylcyclohexane; aprotic polar solvents, such as dimethylformamide (DMF), dimethylacetamide, N-methylpyrrolidone, and dimethylsulfoxide; halogenated hydrocarbons, such as chloroform, dichloromethane, dichloroethane, carbon tetrachloride, chlorobenzene, and trifluoromethylbenzene; chain or cyclic ethers, such as diethyl ether, diisopropyl ether, dimethoxyethane, tetrahydrofuran (THF), and dioxane; esters, such as ethyl acetate and butyl acetate; chain ketones, such as methyl ethyl ketone (MEK) and methyl isobutyl ketone; and nitriles, such as acetonitrile.

The surface-modifying agent is produced by mixing a silane coupling agent and a polyoxyalkylene. For mixing, preferably, a silane coupling agent is added to a polyoxyalkylene and mixed. In this instance, the entire amount of the silane coupling agent may be all added at once. Alternatively, the silane coupling agent may be divided into some aliquots for adding or may be continuously added. The addition speed for continuous adding may be adjusted as appropriate. When a solid polyoxyalkylene is used, the polyoxyalkylene may be heated to turn liquid before mixing.

The stirring speed for mixing is not particularly limited and may be adjusted as appropriate. Preferably, the mixing time is 15 minutes to 2 hours.

After mixing, the reaction is conducted preferably at a temperature of 20°C to 200°C, more preferably 50°C to 150°C. The reaction time after mixing is preferably 1 hour to 50 hours, more preferably 2 hours to 30 hours. The reaction may be conducted in an atmosphere of, for example, air, nitrogen, argon, or any other inert gas. The pressure during the reaction is not particularly limited, and the reaction may be conducted under normal pressure (atmospheric pressure) or under pressure or reduced pressure. The reaction according to the present invention can proceed under normal pressure (atmospheric pressure) and is preferably conducted under normal pressure (atmospheric pressure).

The mole ratio in the mixture of the silane coupling agent to the polyoxyalkylene (silane coupling agent / polyoxyalkylene) is preferably from 0.5 to 1.5.

The surface-modifying agent according to the present invention can be thus produced. The structure of the resulting surface-modifying agent can be identified by, for example, measuring the infrared absorption spectrum by an attenuated total reflection method (ATR method) using a Fourier transform infrared spectrophotometer (FT-IR). The details of this method will be described in the Example.

After the step just described, the surface-modifying agent may be isolated or purified, or the following step (the step of allowing colloidal silica to react with the surface-modifying agent) may be performed.

### <Step of allowing colloidal silica to react with surface-modifying agent>

In this step, the surface-modifying agent obtained above and colloidal silica are allowed to react to produce a surface-modified colloidal silica according to the present invention. The colloidal silica has silanol groups at the surfaces of its particles. The silanol groups function as reaction sites to form siloxane bonds with the surface-modifying agent.

The surface-modifying agent (polyoxyalkylene chain-containing silane coupling agent) is preferably one or more compounds represented by the following formula (1'). The surface-modifying agent may be an individual compound or a combination of two or more compounds.

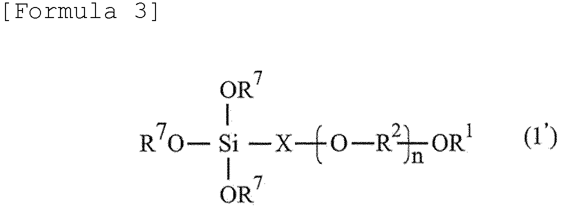

In formula (1'), R¹, R², X, and n are respectively the same as those illustrated and described for the above formulas (1) to (3), including preferable forms. When two or more compounds represented by formula (1') are used, plural R¹s, R²s, Xs, and ns may respectively be the same or different.

In formula (1'), R⁷s each independently represent an aliphatic hydrocarbon group having 1 to 3 carbon atoms. Examples of the aliphatic hydrocarbon group having 1 to 3 carbon atoms include straight or branched alkyl groups, such as methyl, ethyl, propyl, and isopropyl groups; straight or branched alkenyl groups, such as vinyl, allyl, and propenyl groups; and alkynyl groups, such as ethynyl and propynyl groups. Straight or branched alkyl groups are particularly preferable.

Preferably, the present step is performed in a solvent. The solvent may be water and/or an organic solvent that has been illustrated above (in the step of synthesizing the polyoxyalkylene chain-containing silane coupling agent). The solvent may be an individual substance or a combination of two or more substances.

A mixed solution containing colloidal silica, the surface-modifying agent, and the solvent is subjected to a reaction in a reaction vessel with stirring. The proportion of the colloidal silica and surface-modifying agent used for the reaction is appropriately determined depending on the desired degree of surface modification. For example, in an embodiment, the surface-modifying agent may be added preferably in a proportion of 0.1 part by mass to 10 parts by mass, more preferably 0.5 part by mass to 5 parts by mass, relative to 100 parts by mass of colloidal silica.

The colloidal silica and the surface-modifying agent may be mixed in any manner without particular limitation, but, preferably, the surface-modifying agent is added to the colloidal silica and mixed. In this instance, the entire amount of colloidal silica may be all added at once. Alternatively, the colloidal silica may be divided into some aliquots for adding or may be continuously added. The stirring speed for mixing is not particularly limited and may be adjusted as appropriate.

The reaction is conducted preferably at a temperature of 20°C to 200°C, more preferably 30°C to 150°C. The reaction time is preferably 1 hour to 50 hours, more preferably 2 hours to 30 hours. The reaction may be conducted in an atmosphere of, for example, air, nitrogen, argon, or any other inert gas. The pressure during the reaction is not particularly limited, and the reaction may be conducted under normal pressure (atmospheric pressure) or under pressure or reduced pressure. The reaction according to the present invention can proceed under normal pressure (atmospheric pressure) and is preferably conducted under normal pressure (atmospheric pressure).

The surface-modified colloidal silica according to an aspect of the present invention is thus produced.

If the resulting surface-modified colloidal silica contains a dispersing medium other than water, such a nonaqueous dispersing medium may be substituted by water. The manner for substituting the nonaqueous dispersing medium by water is not particularly limited. For example, water may be dropped in a constant amount while the surface-modified colloidal silica is heated. Alternatively, the surface-modified colloidal silica may be separated from the nonaqueous dispersing medium by sedimentation separation, centrifugation, or the like and then dispersed again in water.

The method for producing the surface-modified colloidal silica according to an aspect of the present invention may further include other steps. Examples of such additional steps include the step of filtering the dispersion liquid containing the surface-modified colloidal silica, the step of mixing the dispersion liquid containing the surface-modified colloidal silica with other additives (preferably a pH adjusting agent), and the step of filtering the dispersion liquid containing the surface-modified colloidal silica after mixing with the additive.

The structure of the surface-modified colloidal silica according to the present invention may be identified by, for example, detecting T2 components (in the form represented by formula (2)) or T3 components (in the form represented by formula (3)) using ²⁹Si-NMR. In the description herein, T represents a Si atom with three bonding hands each binding to an O atom and one bonding hand binding to a polyoxyalkylene chain, and numerals 2 and 3 each represent the number of Si-O-Si bonds in which a Si atom is involved. For example, a T2 component represents a component in which Si atoms with three bonding hands binding to O atoms include a Si atom involved in two Si-O-Si bonds. T2 or T3 components binding to polyoxyalkylene chains are not detected in surface-unmodified colloidal silica but are detected in the surface-modified colloidal silica according to an aspect of the present invention. The details of this detection method will be described in the Example.

The surface-modified colloidal silica according to an aspect of the present invention is formed by modifying the surfaces of hydrophilic colloidal silica particles with the surface-modifying groups according to an embodiment of the present invention, consequently exhibiting affinity for both water and organic solvents and having high dispersibility. Also, the wettability on various objects to be polished is increased. Accordingly, the surface-modified colloidal silica can be used favorably in various fields, such as a CMP abrasive, inorganic fillers, inorganic binders, polymer modification agents, polymer flocculants, adsorption agents, additives for painting materials, hard coating agents, anti-slip agents, anti-reflection agents for optical films, metal surface treatment agents, heat resistance-imparting agents, antistatic agents, catalyst carriers, organosols, and the like. A polishing composition containing the surface-modified colloidal silica according to an aspect of the present invention will now be described below.

### [Polishing Composition]

The surface-modified colloidal silica produced in the above-described method can be favorably used as an abrasive. That is to say, according to an aspect of the present invention, a polishing composition containing a surface-modified colloidal silica according to an embodiment of the present invention and a dispersing medium is provided.

The dispersing medium contained in the polishing composition may be water and/or an organic solvent that has been illustrated above (in the step of synthesizing the polyoxyalkylene chain-containing silane coupling agent). The dispersing medium may be an individual substance or a combination two or more substances.

The surface-modified colloidal silica in the polishing composition according to an aspect of the present invention functions as an abrasive. The surface-modified colloidal silica content is preferably 0.1% by mass or more, more preferably 0.2% by mass or more, and still more preferably 0.5% by mass or more relative to the total mass of the polishing composition. Also, the surface-modified colloidal silica content is preferably 20% by mass or less, more preferably 10% by mass or less, and still more preferably 5% by mass or less relative to the total mass of the polishing composition. That is to say, the surface-modified colloidal silica content is, preferably 0.1% to 20% by mass, more preferably 0.2% to 10% by mass, and still more preferably 0.5% to 5% by mass relative to the total mass of the polishing composition.

The polishing composition according to the present embodiment may further optionally contain known additives that can be used in polishing compositions, such as a water-soluble polymer, a pH adjusting agent, a complexing agent, an antiseptic agent, and an antifungal agent, to the extent that the effects of the invention are not inhibited.

The polishing composition according to the present invention is favorably used to polish objects of, for example, single-crystalline silicon, polycrystalline silicon (polysilicon), silicon nitride, silicon carbide-nitride (SiCN), silicon oxide, metals, SiGe, resin, and so on. The object to be polished may be made of a single material or a combination of two or more materials.

Examples of the silicon oxide-containing objects to be polished include a TEOS-type silicon oxide film produced using tetraethyl orthosilicate (TEOS) as a precursor, a high-density plasma (HDP) film, a undoped silicate glass (USG) film, a phosphorus silicate glass (PSG) film, a boron-phospho silicate glass (BPSG) film, and a rapid thermal oxidation (RTO) film.

Examples of the metals include tungsten, copper, aluminum, cobalt, hafnium, nickel, gold, silver, platinum, palladium, rhodium, ruthenium, iridium, and osmium.

While embodiments of the present invention have been described in detail, it is obvious that those embodiments are illustrative, explanatory, and not limiting and that the scope of the present invention should be interpreted according to the appended claims.

### Examples

The present invention will be further described with reference to the Example and Comparative Examples described below. However, the technical scope of the present invention is not limited to the following Example. In the following description, "%" and "part(s)" refer to "% by mass" and "part(s) by mass", respectively unless otherwise specified.

### (Example)

150 g of polyoxyethylene having a weight average molecular weight (Mw) of 20,000 (PEO 20,000, produced by FUJIFILM Wako Pure Chemical Corporation, solid) was added to a 1000 mL heat-resistant airtight container and then melted by heating for 20 hours in an air bath with an 80°C atmosphere. After 20 hours had elapsed, the entire container was placed on an 80°C hot plate. The lid was removed, and the contents were stirred with a stirring blade at 300 rpm. During stirring, 1.5 g of 3-isocyanatopropyltrimethoxysilane (produced by Tokyo Chemical Industry Co., Ltd.) was added at a rate of 0.2 g/s. After adding, stirring was continued at 300 rpm for another 1 hour. The container was sealed again, returned to the air bath with an 80°C atmosphere and heated for 20 hours to yield a target product, surface-modifying agent 1.

Separately, 800 g of a water dispersion liquid of 10% by mass of highly pure colloidal silica (average secondary particle diameter: 70 nm, synthesized by a sol-gel process) was placed in a 1000 mL flask and heated to a liquid temperature of 60°C in a heating mantle. After the temperature had reached 60°C, 1.5 g of surface-modifying agent 1 prepared above was added into the water dispersion liquid with stirring at 100 rpm. The mixture was further stirred at 100 rpm for 2 hours with the liquid temperature kept at 60°C in the heating mantle to yield a target product, surface-modified colloidal silica 1.

The amount of PEO 20,000 modification (the PEO 20,000 content) was calculated relative to the total mass of the resulting surface-modified colloidal silica 1 and was 0.19% by mass.

### (Comparative Example 1)

150 g of polyoxyethylene having a weight average molecular weight (Mw) of 10,000 (PEO 10,000, produced by Merck KGaA, solid) was added to a 1000 mL heat-resistant airtight container and then melted by heating for 20 hours in an air bath with an 80°C atmosphere. After 20 hours had elapsed, the entire container was placed on an 80°C hot plate. The lid was removed, and the contents were stirred with a stirring blade at 300 rpm. During stirring, 3.0 g of 3-isocyanatopropyltrimethoxysilane (produced by Tokyo Chemical Industry Co., Ltd.) was added at a rate of 0.2 g/s. After adding, stirring was continued at 300 rpm for another 1 hour. The container was sealed again, returned to the air bath with an 80°C atmosphere and heated for 20 hours to yield a target product, surface-modifying agent 2.

Separately, 800 g of a water dispersion liquid of 10% by mass of highly pure colloidal silica (average secondary particle diameter: 70 nm, synthesized by a sol-gel process) was placed in a 1000 mL flask and heated to a liquid temperature of 60°C in a heating mantle. After the temperature had reached 60°C, 0.75 g of surface-modifying agent 2 prepared above was added into the water dispersion liquid with stirring at 100 rpm. The mixture was further stirred at 100 rpm for 2 hours with the liquid temperature kept at 60°C in the heating mantle to yield a target product, surface-modified colloidal silica 2.

The amount of PEO 10,000 modification (the PEO 10,000 content) was calculated relative to the total mass of the resulting surface-modified colloidal silica 2 and was 0.09% by mass.

### (Comparative Example 2)

21 g of polyethylene glycol having a weight average molecular weight of 200 (PEG 200 produced by FUJIFILM Wako Pure Chemical Corporation, liquid) was added to a 1000 mL heat-resistant airtight container, and the entire container was placed on an 80°C hot plate. The lid was removed, and the contents were stirred with a stirring blade at 300 rpm. During stirring, 20 g of 3-isocyanatopropyltrimethoxysilane (produced by Tokyo Chemical Industry Co., Ltd.) was added at a rate of 0.2 g/s. After adding, stirring was continued at 300 rpm for another 1 hour. The container, sealed again, was placed in the air bath with an 80°C atmosphere and heated for 20 hours to yield a target product, surface-modifying agent 3.

Separately, 800 g of a water dispersion liquid of 10% by mass of highly pure colloidal silica (average secondary particle diameter: 70 nm, synthesized by a sol-gel process) was placed in a 1000 mL flask and heated to a liquid temperature of 60°C in a heating mantle. After the temperature had reached 60°C, 0.03 g of surface-modifying agent 3 prepared above was added into the water dispersion liquid with stirring at 100 rpm. The mixture was further stirred at 100 rpm for 2 hours with the liquid temperature kept at 60°C in the heating mantle to yield a target product, surface-modified colloidal silica 3.

The amount of PEG 200 modification (the PEG 200 content) was calculated relative to the total mass of the resulting surface-modified colloidal silica 3 and was 0.002% by mass.

### (Comparative Example 3)

Surface-modified colloidal silica 4 was obtained in the same manner as in Comparative Example 1, except that the amount of surface-modifying agent 2 added was varied to 1.5 g.

The amount of PEO 10,000 modification (the PEO 10,000 content) was calculated relative to the total mass of the resulting surface-modified colloidal silica 4 and was 0.19% by mass.

### (Comparative Example 4)

Surface-modified colloidal silica 5 was obtained in the same manner as in Comparative Example 2, except that the amount of surface-modifying agent 3 added was varied to 3.1 g.

The amount of PEG 200 modification (the PEG 200 content) was calculated relative to the total mass of the resulting surface-modified colloidal silica 5 and was 0.19% by mass.

### (Comparative Example 5)

150 g of polyoxyethylene having a weight average molecular weight of 20,000 (PEO 20,000, produced by FUJIFILM Wako Pure Chemical Corporation, solid) was added to a 250 mL heat-resistant airtight container and then melted by heating for 20 hours in an air bath with an 80°C atmosphere.

Separately, 800 g of a water dispersion liquid of 10% by mass of highly pure colloidal silica (average secondary particle diameter: 70 nm, synthesized by a sol-gel process) was placed in a 1000 mL flask and heated to a liquid temperature of 60°C in a heating mantle. After the temperature had reached 60°C, 1.485 g of the PEG 20,000 melted above by heating was added into the water dispersion liquid with stirring at 100 rpm. A target mixture of polyethylene glycol and colloidal silica was thus prepared.

### [Evaluation]

### <Structural Identification of Surface-Modifying Agent>

The structure of surface-modifying agent 1 obtained above was identified with the following FT-IR analyzer:
Apparatus used: Fourier transform infrared spectrometer (Spectrum 100, manufactured by PerkinElmer Inc.)
Detection method: Attenuated total reflection (ATR) method

More specifically, 1 g of sample was removed from the reaction system at the time when 10 minutes elapsed after 3-isocyanatopropyltrimethoxysilane had been added in the above-described Example. The FT-IR spectrum of the removed sample was measured with the sample placed on the ATR measurement crystal of Spectrum 100. As a result, a peak of the isocyanate group derived from the silane coupling agent was observed around 2260 cm⁻¹.

Additionally, another 1 g of the sample was removed from the reaction system at the time when the reaction was completed. The FT-IR spectrum of the removed sample was measured with the sample placed on the ATR crystal of Spectrum 100. As a result, it was observed that the peak of the isocyanate group derived from the silane coupling agent disappeared around 2260 cm⁻¹. These results showed that surface-modifying agent 1 in which the polyoxyethylene and the silane coupling agent are bound was produced.

Similarly, surface-modifying agents 2 and 3 obtained in Comparative Examples 1 and 2 were sampled after 10 minutes of the reaction of the silane coupling agent and after the completion of the reaction in the same manner as surface-modifying agent 1 and were subjected to FT-IR measurements as above. As a result, it was observed that the peak of the isocyanate group derived from the silane coupling agent observed around 2260 cm⁻¹ after 10 minutes of the reaction disappeared after the completion of the reaction. This suggests that target products, surface-modifying agents 2 and 3 were produced.

### <Structural Identification of Surface-Modified Colloidal silica>

The structure of surface-modified colloidal silica was identified with the following ²⁹Si-NMR analyzer. More specifically, two measurement model samples were produced in the same manner as in the synthesis of surface-modified colloidal silica 1 in the Example, except that the amounts of the silane coupling agent and the polyoxyalkylene were increased. The resulting measurement model samples were subjected to ²⁹Si-NMR measurement. Model sample B contained larger amounts than model sample A of silane coupling agent and polyoxyalkylene. Additionally, surface-unmodified colloidal silica was also prepared for comparison.

### <<²⁹Si-NMR Analyzer>>

Spectroscope: AVANCE 300 (manufactured by Bruker Corporation)
Nucleus observed: ²⁹Si (resonant frequency: 59.6 MHz)
Measurement method: CP/MAS method (using standard pulse sequence cp. av manufactured by Bruker Corporation)
· MAS conditions: 3.5 kHz
Relaxation delay: 4 s
Contact time: 8 ms
Integration count:
   Model sample A: 80,000
   Model sample B: 65,536
   Surface-modified colloidal silica: 4,096
Measurement temperature: room temperature (measured temperature: 24°C)

²⁹Si-NMR measurement results suggest that both model samples A and B contain T2 components and T3 components. In contrast, the presence of T2 components or T3 components was not confirmed in the surface-unmodified colloidal silica. These results showed that the target surface-modified colloidal silica was produced in the synthesizing method conducted in Example.

### <Wettability>

Water dispersion liquids of the surface-modified colloidal silicas produced in the above-described Example and Comparative Examples 1 to 3 and an aqueous solution of the mixed silica produced in Comparative Example 5 were each taken into a beaker, in which a 2 cm × 5 cm cut piece of a silicon wafer was immersed for 30 s. After being pulled up, the silicon wafer was rubbed with a wiping cloth for 30 seconds. Then, the silicon wafer was immersed in pure water in a beaker and washed for 30 seconds with gentle shaking. After being washed, the silicon wafer was pulled up, and the wet condition on the surface of the wafer was visually observed. Wettability was rated according to the following criteria. Samples rated A can be used in practice.
A (good): 70% or more of the entire surface of the silicon wafer keeps wet.
B (partially poor): 50% to less than 70% of the silicon wafer keeps wet.
C (poor): Less than 50% of the silicon wafer keeps wet.

The sample of Comparative Example 4 gelled partially and could not be evaluated.

### (Stability over Time)

100 g of each of water dispersion liquids of surface-modified colloidal silicas produced in the Example and Comparative Examples 1 to 4 and the mixture prepared in Comparative Example 5 was removed into an individual air-tight container (with a capacity of 100 mL) and was allowed to stand at room temperature (25°C) for 24 hours. After 24 hours had elapsed, the samples were observed for the settling state visually and checked for whether the silica sol was turned into gel. The stability over time of surface-modified colloidal silicas was thus rated according to the following criteria. Samples rated A can be used in practice.
A (good): No changes from the state at the beginning of leaving to stand
B (slightly poor): Slight settling is observed
C (poor): Settling is severe.

The following Table 1 presents the evaluation results for wettability and stability over time.

**[Table 1]**

| | Wettability | Stability over time |
|---|---|---|
| Example | A | A |
| Comparative Example 1 | B | A |
| Comparative Example 2 | C | A |
| Comparative Example 3 | A | B |
| Comparative Example 4 | Not evaluated because of partial gelation | C |
| Comparative Example 5 | B | A |

Table 1 clearly shows that the surface-modified colloidal silica of the Example is superior in both wettability and stability over time. In contrast, the surface-modified colloidal silicas of Comparative Examples 1 to 5 are inferior in at least either wettability or stability over time.

## Claims

1. A surface-modified colloidal silica comprising:
colloidal silica; and
a surface-modifying group for modifying a surface of the colloidal silica, which has a polyoxyalkylene chain having a weight average molecular weight of 20,000 or more,
wherein the surface-modifying group is chemically bonded to the surface of the colloidal silica via siloxane bonds.

2. The surface-modified colloidal silica according to claim 1, wherein the polyoxyalkylene chain is at least one selected from the group consisting of a polyoxyethylene chain, a polyoxypropylene chain, a polyoxyethylene-polyoxypropylene chain, and a polyoxyalkylene-polyoxypropylene-polyoxyalkylene chains.

3. The surface-modified colloidal silica according to claim 1, wherein the polyoxyalkylene chain is a polyoxyethylene chain.

4. The surface-modified colloidal silica according to claim 1, wherein the surface-modifying group contains a urethane linkage.

5. A polishing composition comprising:
the surface-modified colloidal silica according to claim 1; and
a dispersing medium.

## Patentansprüche

1. Oberflächenmodifiziertes kolloidales Siliciumdioxid, umfassend:
kolloidales Siliciumdioxid; und
eine oberflächenmodifizierende Gruppe zur Modifizierung einer Oberfläche des kolloidalen Siliciumdioxids, die eine Polyoxyalkylenkette mit einem gewichtsmittleren Molekulargewicht von 20.000 oder mehr aufweist,
wobei die oberflächenmodifizierende Gruppe über Siloxanbindungen chemisch an die Oberfläche des kolloidalen Siliciumdioxids gebunden ist.

2. Oberflächenmodifiziertes kolloidales Siliciumdioxid gemäß Anspruch 1, wobei die Polyoxyalkylenkette mindestens eine ist, die aus der Gruppe bestehend aus einer Polyoxyethylenkette, einer Polyoxypropylenkette, einer Polyoxyethylen-Polyoxypropylen-Kette und Polyoxyalkylen-Polyoxypropylen-Polyoxyalkylen-Ketten ausgewählt ist.

3. Oberflächenmodifiziertes kolloidales Siliciumdioxid gemäß Anspruch 1, wobei die Polyoxyalkylenkette eine Polyoxyethylenkette ist.

4. Oberflächenmodifiziertes kolloidales Siliciumdioxid gemäß Anspruch 1, wobei die oberflächenmodifizierende Gruppe eine Urethanbindung enthält.

5. Polierzusammensetzung, umfassend:
das oberflächenmodifizierte kolloidale Siliciumdioxid gemäß Anspruch 1; und
ein Dispergiermedium.

## Revendications

1. Silice colloïdale modifiée en surface comprenant :
une silice colloïdale ; et
un groupe de modification de surface pour modifier une surface de la silice colloïdale, qui a une chaîne polyoxyalkylène ayant un poids moléculaire moyen en poids de 20 000 ou plus,
dans laquelle le groupe de modification de surface est chimiquement lié à la surface de la silice colloïdale via des liaisons siloxane.

2. Silice colloïdale modifiée en surface selon la revendication 1, dans laquelle la chaîne polyoxyalkylène est au moins une chaîne sélectionnée parmi le groupe constitué d'une chaîne polyoxyéthylène, d'une chaîne polyoxypropylène, d'une chaîne polyoxyéthylène-polyoxypropylène et d'une chaîne polyoxyalkylène-polyoxypropylène-polyoxyalkylène.

3. Silice colloïdale modifiée en surface selon la revendication 1, dans laquelle la chaîne polyoxyalkylène est une chaîne polyoxyéthylène.

4. Silice colloïdale modifiée en surface selon la revendication 1, dans laquelle le groupe de modification de surface contient une liaison uréthane.

5. Composition de polissage comprenant :
la silice colloïdale modifiée en surface selon la revendication 1 ; et
un milieu dispersant.
